Europäisches Patentamt

European Patent Office

Office européen des brevets

(19)

(11) Veröffentlichungsnummer: **0 189 083**
**B1**

(12) **EUROPÄISCHE PATENTSCHRIFT**

(45) Veröffentlichungstag der Patentschrift: **02.05.90**

(51) Int. Cl.⁵: **F 16 D 66/00**

(21) Anmeldenummer: **86100353.1**

(22) Anmeldetag: **13.01.86**

(54) Einrichtung zum Messen und/oder Regeln des Verschleisses eines Bauteils.

(30) Priorität: **23.01.85 DE 3502052**

(43) Veröffentlichungstag der Anmeldung:
**30.07.86 Patentblatt 86/31**

(45) Bekanntmachung des Hinweises auf die
Patenterteilung:
**02.05.90 Patentblatt 90/18**

(84) Benannte Vertragsstaaten:
**AT DE FR GB IT NL SE**

(56) Entgegenhaltungen:
**EP-A-0 189 082**
**DE-A-2 523 488**
**DE-A-3 010 498**
**DE-A-3 300 446**
**DE-A-3 407 716**
**FR-A-2 107 232**
**FR-A-2 123 972**
**FR-A-2 246 775**

(73) Patentinhaber: **WABCO Westinghouse
Fahrzeugbremsen GmbH
Am Lindener Hafen 21 Postfach 91 12 80
D-3000 Hannover 91 (DE)**

(72) Erfinder: **Reinecke, Erich, Ing. grad.
Kastanieneck 6
D-3167 Burgdorf (DE)**

(74) Vertreter: **Schrödter, Manfred
WABCO Westinghouse Fahrzeugbremsen
GmbH Am Lindener Hafen 21 Postfach 91 12 80
D-3000 Hannover 91 (DE)**

Courier Press, Leamington Spa, England.

**Beschreibung**

Die Erfindung betrifft eine Einrichtung zu Messen und/oder Regeln des Verschleißes eines ersten Bauteils nach dem Oberbegriff des Patentanspruchs 1.

Eine derartige Einrichtung ist us der DE-A-33 00 446 bekannt. Dabei handelt es sich um eine Einrichtung zur Messung des Verschleißzustandes eines als erstes Bauteil anzusehenden Bremsbelags, der mit einer als zweites Bauteil anzusehenden Bremstrommel bzw. Bremsscheibe durch den Betätigungshub eines Bremszylinders in gleitenden Eingriff gebracht wird und dabei verschleißt. Zur Verschleißmessung schlägt der Stand der Technik die Messung des minimalen Bremszylinderhubs vor. Als verschleißabhängiges Signal wird die Zunahme des minimalen Bremszylinderhubs über eine Reihe von Bremsbetätigungen ausgewertet.

Bei dieser Lösung wird also ein Parameter eines an dem Verschleißvorgang direkt gar nicht beteiligten Bauteils, nämlich des Bremszylinders, überwacht. Die Verschleißermittlung erfolgt damit indirekt. Der zu diesem Zweck an dem Bremszylinder erforderliche Meßwertaufnehmer bedeutet einschließlich seiner Anbauteile und der damit verbundenen Änderungen am Bremszylinder einen erheblichen Aufwand.

Der Erfindung liegt deshalb die Aufgabe zugrunde, eine Einrichtung der eingangs genannten Art mit einfachen Mitteln derart zu verbessern, daß sie eine direkte Verschleißmessung ermöglicht und dabei eines minimalen Aufwands bedarf.

Diese Aufgabe wird durch die im Patentanspruch 1 angegebene Erfindung gelöst. Weiterbildungen und vorteilhafte Ausgestaltungen sowie ein vorteilhaftes Anwendungsgebiet sind in den Unteransprüchen angegeben.

Beim gleitenden Eingriff können das erste und das zweite Bauteil gewichtsbelastet oder durch eine oder mehrere Zuspanneinrichtungen gegeneinander vorgespannt sein. Insbesondere kann das erste Bauteil durch einen oder mehrere druckmittelbeaufschlagte (n) Zuspannzylinder mit einer festen oder variablen Anpreßkraft an das zweite Bauteil angepreßt werden.

Die Erfindung nutzt, vereinfacht ausgedrückt, die bei dem gleitenden Eingriff der genannten Bauteile erfolgende Umsetzung der geleisteten Reibarbeit in Wärme aus. Dabei geht die Erfindung, vereinfacht ausgedrückt, von dem Gedanken aus, das sich mit zunehmendem Verschleiß (d.h. Masseverlust) ändernde Wärmeaufnahmevermögen des ersten Bauteils als Kenngröße für dessen Verschleiß heranzuziehen. Das sich ändernde Wärmeaufnahmevermögen des ersten Bauteils ist als geändertes Temperaturverhalten des ersten oder des zweiten Bauteils oder einer Mischtemperatur beider Bauteile bei oder nach ihrem gleitenden Eingriff meßbar. Desgleichen kann zu diesem Zweck das Temperaturverhalten eines dem ersten Bauteil benachbarten Bauteils, etwa eines dieses aufnehmenden Trägers, ausgewertet werden.

Damit bietet die Erfindung den Vorteil, daß sie praktisch verzögerungsfrei und nicht erst nach zeitaufwendigen Meßreihen zu Ergebnissen führt.

In einer ersten Ausführungsform wird die Temperatur des ersten Bauteils selbst überwacht. Dabei kann der Temperatursensor in dem ersten Bauteil und/oder dem diesem benachbarten Bauteil, beispielsweise in dessen Träger, angeordnet sein.

In einer anderen Ausführungsform wird die Temperatur des zweiten Bauteils überwacht. Auch eine Mischtemperatur beider Bauteile kann erfaßt werden.

In einer anderen Ausführungsform wird die Temperatur des genannten benachbarten Bauteils überwacht. Bei dieser Ausführungsform ist der Temperatursensor in oder an diesem angeordnet.

Zur Messung der Temperaturen des ersten Bauteils oder des zweiten Bauteils als auch zur Messung der genannten Mischtemperatur kann der Temperatursensor auch im oder am zweiten Bauteil angeordnet sein. Vorteilhaft ist die Anbringung des Temperatursensors in der Regel an demjenigen dieser Bauteile, welches überhaupt oder während der Messung gegenüber der Auswerteeinrichtung ortsfest ist. Dadurch läßt sich eine Übertragung der Temperatursignale über beispielsweise Schleifverbindungen oder Leitungen mit Längenausgleich vermeiden.

Die Temperaturmessung kann während des gleitenden Eingriffs erfolgen. Da sich während des gleitenden Eingriffs aber zeitlich und örtlich instationäre Temperaturzustände ergeben, weil die Umsetzung von Reibarbeit in Wärme noch andauert, kann in einer vorteilhaften Ausgestaltung die Temperaturmessung auch zu einem vorbestimmten Zeitpunkt nach dem gleitenden Eingriff erfolgen. Dieser Zeitpunkt kann so festgelegt werden, daß sich die Temperatur innerhalb des der Messung unterworfenen Bauteils oder innerhalb der Bauteile derart verteilt bzw. ausgeglichen hat, daß ein repräsentatives Ergebnis gewonnen werden kann.

In der Regel wird mit zunehmendem Verschleiß die Temperatur des ersten Bauteils oder seines benachbarten Bauteils und/oder des zweiten Bauteils und/oder die genannte Mischtemperatur eine steigende Tendenz zeigen. Es gibt aber auch Ausführungsformen, in denen mit verschleißbedingt abnehmender Masse des ersten Bauteils der Wärmeabfluß in benachbarte Bauteile, etwa den Träger, zunimmt, wobei eine abnehmende Tendenz der Temperaturen des ersten und/oder zweiten Bauteils und/oder der Mischtemperatur die Folge ist.

Die vorstehend erwähnten Ausführungsformen können in vorteilhafter Weise so ausgeführt sein, daß auf der Länge und/oder der Breite der im Eingriff stehenden Flächen eine Mehrzahl von Temperatursensoren angeordnet ist, deren Temperatursignal dem arithmetischen oder gewichteten Mittelwert der Signale der einzelnen Temperatursensoren entspricht. Insbesondere kann diese Mehrzahl von Temperatursensoren je nach Ausbildung des ersten Bauteils und/oder des erwähnten benachbarten Bauteils, auf deren Länge bzw. deren Umfang und/oder deren Breite verteilt angeordnet sein. Erfolgt die Bildung des Temperatursignals aus dem gewichteten Mittelwert der Signale der einzelnen Temperatursensoren, kann die Wichtung so erfolgen, daß die Meßwerte eines oder mehrerer Temperatursensoren bei der Mittelwertbildung besonders bewertet werden. Dies kann beispielsweise dann nützlich bzw. erforderlich sein, wenn die im Bereich dieser Temperatursensoren auftretenden Temperaturen besonders repräsentativ oder besonders gefährlich für den Werkstoff des ersten Bauteils sind.

Der Auswerteeinrichtung ist je nach Ausführungsform ein Kennfeld des Temperaturverhaltens des ersten Bauteils oder des benachbarten Bauteils und/oder des zweiten Bauteils und/oder der Mischtemperatur in Abhängigkeit vom Verschleißzustand des ersten Bauteils eingespeichert.

In einer Ausführungsform enthält das eingespeicherte Kennfeld, in Abhängigkeit vom Verschleißzustand des ersten Bauteils, Kennlinien der Temperaturen des oder der von dem oder den Temperatursensoren überwachten Bauteile oder ihrer Mischtemperatur in Abhängigkeit von ihrer Anfangstemperatur (Temperatur vor dem gleitenden Eingriff).

Kann sich die bei dem gleitenden Eingriff geleistete Reibarbeit von Eingriff zu Eingriff ändern, so muß das Kennfeld auch die geleistete Reibarbeit repräsentierende Parameter enthalten. Da die geleistete Reibarbeit dem Verlust an kinetischer Energie des aus dem ersten, dem zweiten, dem etwa benachbarten sowie etwa weiteren benachbarten Bauteilen bestehenden Systems entspricht, können als geeignete Parameter für die geleistete Reibarbeit die Massen der Teile des Systems und die Anfangs- und die Endgeschwindigkeit des gleitenden Eingriff ausgewertet werden.

Ist beispielsweise das erste Bauteil ortsfest, so kann in bekannter Weise aus Masse, Anfangs- und Endgeschwindigkeit des zweiten Bauteils die geleistete Reibarbeit bestimmt werden.

Bei einer Ausführungsform nach den vorstehenden beiden Absätzen werden der Auswerteeinrichtung über geeignete Meßwertaufnehmer die beim gleitenden Eingriff verzögerten Massen sowie deren Anfangs- und Endgeschwindigkeit dabei kennzeichnende Massen- sowie Geschwindigkeitssignale zugeführt. Die Auswerteeinrichtung ist dabei derart ausgebildet, daß ihr Kennfeld diese Signale als Parameter enthält.

Die von der Auswerteeinrichtung anhand des eingespeicherten Kennfelds und der eingespeicherten Parameter und der zugeführten Signale ermittelten Verschleißwertsignale können zur Steuerung einer Anzeigeeinrichtung für den Verschleiß und/oder einer Warneinrichtung für den Eintritt eines zulässigen Höchstverschleißes herangezogen werden.

Für den Fall, daß mehrere jeweils aus wenigstens einem ersten Bauteil und zugeordnetem zweiten Bauteil bestehende Gruppen vorhanden sind, können für jede Gruppe oder einige Gruppen eine eigene Anzeige- und/oder Warneinrichtung vorgesehen sein, wobei die Auswerteeinrichtung für jede Gruppe einen eigenen Kanal aufweist, oder nur eine Anzeige- und/oder Warneinrichtung vorgesehen sein, wobei die Auswerteeinrichtung und/oder die Anzeige- und/oder die Warneinrichtung auf jede oder einige Gruppen umschaltbar sind.

In einer Ausführungsform bilden das erste Bauteil und das zweite Bauteil eine Bremseinrichtung, insbesondere eine Radbremse eines Fahrzeugs, wobei das erste Bauteil als auf einem Belagträger als benachbartem Bauteil angeordneter Bremsbelag und das zweite Bauteil als zugeordnete Bremstrommel oder Bremsscheibe ausgebildet sind.

Ein Anwendungsgebiet einer derartigen Bremseinrichtung ist die Fahrzeugtechnik, wobei die Bremseinrichtung als druckmittelbetätigte Radbremse ausgebildet sein kann. In diesem Fall kann bzw. können die Anzeige- und/oder Warneinrichtung(en) dem Fahrzeugführer den Verschleißzustand bzw. den Eintritt eines zulässigen Höchstverschleißes des Bremsbelags einer oder der Radbremsen anzeigen.

Beim Einsatz der Erfindung in der Fahrzeugtechnik gelten die oben gemachten Ausführungen hinsichtlich der Anordnung der Temperatursensoren an den Bauteilen sowie der Gewinnung von die Reibarbeit kennzeichnenden Signalen entsprechend. Die Massesignale können in der Fahrzeugtechnik aus wenigstens einem die der Radbremse zugeordnete Teilmasse des Fahrzeugs erfassenden Meßglied (Massesensor), die Geschwindigkeitssignale aus einem die Fahrzeuggeschwindigkeit erfassenden Meßglied (Geschwindigkeitssensor) gewonnen werden.

Es können auch Temperatursensoren an zwei Radbremsen angeordnet sein. Die Auswerteeinrichtung kann in diesem Fall als Vergleichs- und Regeleinrichtung ausgebildet sein, welche die von den den Radbremsen zugeordneten Temperatursensoren stammenden Temperatursignale untereinander oder mit einem, gegebenenfalls aus dem Kennfeld gewonnenen, Sollwert vergleicht und über zugeordnete Druckregelventile den als Bremsdruck der verschiedenen Radbremsen dienenden Druckmitteldruck der Zuspannzylinder im Sinne einer Angleichung der Temperatursignale und damit des Verschleißes der Bremsbeläge und/oder der Bremsmomente der Radbremsen aneinander oder an den Sollwert steuert.

Bei der im vorigen Absatz beschriebenen Ausführungsform kann die Auswerteeinrichtung auch derart ausgebildet sein, daß sie nach dem eingespeicherten Kennfeld und gegebenenfalls den eingespeicherten Parametern der Reibarbeit aus den bei einer oder nach einer oder mehreren früheren Bremsbetätigungen zugeführten Temperatursignalen sowie den bei dieser bzw. diesen früheren Bremsbetätigungen zugeführten, die Parameter kennzeichnenden Signalen Korrekturwerte der den verschiedenen Radbremsen zuzuführende Bremsdrücke errechnet und speichert und bei einer Bremsbetätigung durch Steuerung der Druckregelventile die Bremsdrücke nach den Korrekturwerten regelt. Als die Parameter kennzeichnende Signale können dabei die bereits erwähnten Signale der Massesensoren bzw. des Geschwindigkeitssensors herangezogen werden.

Als Korrekturwerte kommen in vorteilhafter Weise ein Sollwert oder ein Sollwertkennfeld für die Differenz und/oder den Quotienten der den verschiedenen Radbremsen zuzuführenden Bremsdrücke in Frage, in welchem Falle die Auswerteeinrichtung die genannten Bremsdrücke nach dem Sollwert oder dem Sollwertkennfeld regelt. Dabei kann die Auswerteeinrichtung derart ausgebildet sein, daß sie die Korrekturwerte, insbesondere den genannten Sollwert oder das Sollwertkennfeld, anhand der bei oder nach der Bremsbetätigung zugeführten Temperatursignale sowie der bei der Bremsbetätigung gewonnenen Masse - bzw. Geschwindigkeitssignale aktualisiert. Es liegt auf der Hand, daß die Bremsdrücke auf diese Weise stets unter Berücksichtigung der jüngsten Meßergebnisse geregelt werden.

In vorteilhafter Weise kann bei der vorstehend beschriebenen Anwendung der Erfindung in der Fahrzeugtechnik die Temperaturmessung nach Abschluß jeder Bremsbetätigung erfolgen, wobei die weiter oben für den Fall der Messung nach dem gleitenden Eingriff der Bauteile gemachten Ausführungen entsprechend gelten.

Die Auswerteeinrichtung kann auch derart ausgebildet sein, daß sie nicht die Signale jeder früheren Bremsbetätigung, sondern nur diejenigen aus einer durch festgelegte Randbedingungen besonders gekennzeichneten Auswahl von Bremsbetätigungen berücksichtigt.

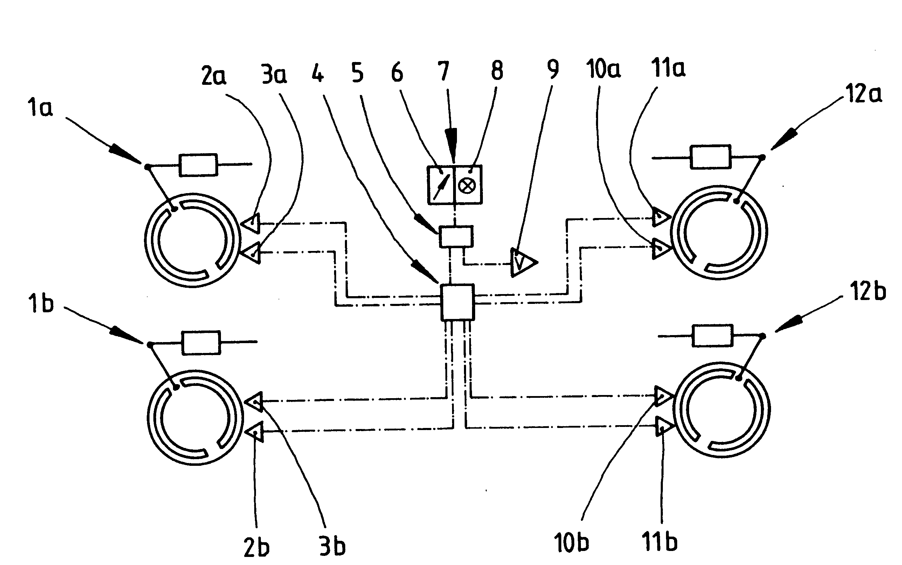

Die Erfindung wird nachstehend anhand eines in der Zeichnung dargestellten Ausführungsbeispiels beschrieben, wobei selbstverständlich die Anwendungsmöglichkeiten der Erfindung auf dieses nicht beschränkt sind.

Die Zeichnung zeigt schematisch und ausschnittsweise die Bremsanlage eines Kraftfahrzeugs.

Funktionsgleiche Einrichtungen sind darin jeweils mit dem Index "a" für die eine, beispielsweise die rechte, und mit dem Index "b" für die andere, beispielsweise die linke, Fahrzeugseite bezeichnet. Strichpunktiert gezeichnete Linien bedeuten in der Darstellung elektrische Leitungen bzw. Verbindungen.

Die Bremsanlage weist als Bremseinrichtungen in bekannter Weise als Trommelbremsen ausgebildete und deshalb nicht näher beschriebene Vorderradbremsen 1 und Hinterradbremsen 12 auf. Zur Betätigung jeder dieser Radbremsen ist jeweils ein in ebenfalls bekannter Weise aufgebauter und deshalb nicht näher beschriebener Bremszylinder vorgesehen, dem über als durchgezogene Linien angedeutete Druckmittelleitungen Bremsdruck zugeführt wird.

Den Radbremsen sind Temperatursensoren zugeordnet, die an der Vorderachse mit 2 und an der Hinterachse mit 11, jeweils mit dem zugehörigen Index für die Fahrzeugseite bezeichnet sind.

Für die Anordnung der Temperatursensoren an den Bauteilen der Radbremse gelten die weiter vorn gemachten Ausführungen, wobei die Bremstrommel als zweites Bauteil, ein Bremsbelag als erstes Bauteil und der Bremsbelagträger als diesem benachbarten Bauteil gelten. Die Radbremsen weisen in nicht näher dargestellter Weise wenigstens einen weiteren als erstes Bauteil ausgebildeten Bremsbelag auf, für den in Verbindung mit der Bremstrommel und gegebenenfalls seinem Belagträger die weiter vorn und im folgenden gemachten Ausführungen in entsprechender Weise gelten.

Die Temperatursensoren sind als Einzelsensoren dargestellt, sie können aber auch in weiter vorn beschriebener Weise ein Mittelwertbildner aus einer Mehrzahl einzelner Temperatursensoren sein.

Mit 3 sind der Vorderachse, mit 10 der Hinterachse, jeweils in Verbindung mit dem zugehörigen Index für die Fahrzeugseite, zugeordnete Massesensoren bezeichnet, die die der jeweiligen Radbremse zugeordnete Fahrzeugmasse sensieren.

Mit 4 ist eine Schalteinrichtung bezeichnet. Diese weist, wie der Darstellung zu entnehmen ist, für die Signalleitungen von den jeder Radbremse zugeordneten Sensoren jeweils einen eigenen Signaleingang und einen einzigen Ausgang auf. Ausgangsseitig ist die Schalteinrichtung mit einer Auswerteeinrichtung 5 verbunden. Die Schalteinrichtung 4 dient zur wahlweisen Abfrage der von den den Radbremsen zugeordneten Sensoren gelieferten Temperatur- und Massesignale. Die Schalteinrichtung 4 kann als manuell betätigbarer oder programmgesteuerter Umschalter ausgebildet sein. Das Signal eines Geschwindigkeitssensors 9 wird der Auswerteeinrichtung 5 direkt zugeführt.

Die Auswerteeinrichtung 5 bildet anhand eines in der weiter vorn beschriebenen Weise ausgebildeten Kennfelds sowie der von dem Geschwindigkeitssensor 9 und dem jeweiligen Massesensor 3 bzw. 10 gelieferten Signale als Parameter ein Verschleißwertsignal, welches einer Anzeige- und Warneinrichtung 7 zugeführt wird. Die Anzeige- und Warneinrichtung 7 weist eine durch einen Pfeil symbolisierte analoge oder digitale Verschleißanzeigeeinrichtung 6 und eine durch eine Warnleuchte symbolisierte Warneinrichtung 8 auf. Die Verschleißanzeigeeinrichtung 6 zeigt in Abhängigkeit von der Stärke des von der Auswerteeinrichtung 5 gelieferten Verschleißwertsignals den Verschleiß bzw. die noch vorhandene Bremsbelagdicke an. Die Warneinrichtung 8 gibt ein im vorliegenden Falle optisches Warnsignal ab, wenn die von der Auswerteeinrichtung 5 gelieferten Verschleißwertsignale einen Verschleißhöchstwert bzw. das Erreichen einer Mindestbelagstärke signalisieren. In der Anzeige- und Warneinrichtung 7 ist dabei eine Zusatzanzeige für die Angabe der Radbremse, auf die sich die jeweilige Verschleißwertanzeige bzw. das Warnsignal beziehen, vorgesehen.

Die Schalteinrichtung 4 und/oder die Auswerteeinrichtung 5 und/oder die Anzeige- und Warneinrichtung 7 sind mit einem Zwischenspeicher für die zuletzt ermittelten Signal- bzw. Anzeigewerte ausgestattet, der Anzeigen, Warnsignale und Abfragen der Sensoren auch außerhalb von Bremsbetätigungen ermöglicht.

Die Auswerteeinrichtung 5 kann auch so ausgebildet sein, daß sie die weiter oben beschriebenen Steuer- bzw. Regelvorgänge zur Angleichung festgestellter Temperatur- und/oder Bremsmomentenungleichheiten auslöst. In dem weiter oben näher bezeichneten Fall der Regelung der Bremsdrücke nach Korrekturwerten müßten in der Druckmittelzuleitung jedes Bremszylinders zusätzlich zu der in bekannter Weise vorhandenen Bremsbetätigungseinrichtung ein Druckregelventil eingesetzt sein bzw. die Bremsbetätigungseinrichtung mit der Funktion solcher Druckregelventile ausgerüstet sein.

Es liegt auf der Hand, daß das vorstehende, sich auf eine Fahrzeugzeugbremsanlage beziehende Ausführungsbeispiel, nicht den ausschließlichen Anwendungsbereich der vorliegenden Erfindung beschreibt.

**Patentansprüche**

1. Einrichtung zum Messen und/oder Regeln des Verschleißes eines ersten Bauteils, das beim gleitenden Eingriff mit einem zweiten Bauteil verschleißt, mit wenigstens einem verschleißabhängige Ausgangssignale abgebenden Meßglied, wobei die Ausgangssignale einer Auswerteeinrichtung zugeführt werden, gekennzeichnet durch folgendes Merkmal: das Meßglied ist als in oder an dem ersten Bauteil und/oder in oder an einem diesem benachbarten Bauteil und/oder in oder an dem zweiten Bauteil angeordneter Temperatursensor (2a, 2b, 11a, 11b) ausgebildet, dessen temperaturabhängige Ausgangssignale, nachstehend Temperatursignale, von der Auswerteeinrichtung (5) zu Verschleißwertsignalen ausgewertet und als solche ausgegeben werden.

2. Einrichtung nach Anspruch 1, dadurch gekennzeichnet, daß eine Anzeige- und/oder eine Warneinrichtung (7) vorgesehen sind, die von den Verschleißsignalen gesteuert werden.

3. Einrichtung nach einem der Ansprüche 1 oder 2, dadurch gekennzeichnet, daß mehrere aus erstem Bauteil und zugeordnetem zweiten Bauteil bestehende Gruppen (1a, 1b, 12a, 12b) vorgesehen sind, für deren jede oder für einige von denen die Auswerteeinrichtung (5) und/oder die Anzeigeund/oder die Warneinrichtung (7) einen eigenen Kanal aufweisen oder auf deren jede oder auf einige von denen die Auswerteeinrichtung (5) und/oder die Anzeigeund/oder die Warneinrichtung (7) umschaltbar sind.

4. Einrichtung nach einem der vorhergehenden Ansprüche, dadurch gekennzeichnet, daß der Temperatursensor (2a, 2b, 11a, 11b) in dem ersten Bauteil und/oder dem diesem benachbarten Bauteil, etwa einem dieses aufnehmenden Träger, derart angeordnet ist, daß er die Temperatur des ersten Bauteils mißt.

5. Einrichtung nach einem der Ansprüche 1 bis 3, dadurch gekennzeichnet, daß der Temperatursensor (2a, 2b, 11a, 11b) in oder an dem dem ersten Bauteil benachbarten Bauteil, etwa dessen Träger, angeordnet ist und die Temperatur dieses benachbarten Bauteils erfaßt.

6. Einrichtung nach einem der Ansprüche 4 oder 5, dadurch gekennzeichnet, daß eine Mehrzahl von Temperatursensoren auf der Länge bzw. auf dem Umfang und/oder der Breite des ersten Bauteils und/oder des diesem benachbarten Bauteils verteilt angeordnet ist und daß das Temperatursignal dem arithmetischen oder gewichteten Mittelwert der Signale der einzelnen Temperatursensoren entspricht.

7. Einrichtung nach einem der vorhergehenden Ansprüche, gekennzeichnet durch folgendes Merkmal: der Auswerteeinrichtung (5) ist ein Kennfeld der Zuordnung von Temperatur des ersten bzw. Temperatur des zweiten Bauteils bzw. einer Mischtemperatur beider bzw. Temperatur des benachbarten Bauteils vor und nach dem gleitenden Eingriff und Verschleiß des ersten Bauteils eingespeichert, anhand dessen die Auswerteeinrichtung (5) nach den zugeführten Temperatursignalen das Verschleißwertsignal ermittelt.

8. Einrichtung nach Anspruch 7, gekennzeichnet durch die folgenden Merkmale: a) der Auswerteeinrichtung (5) werden die beim gleitenden Eingriff geleistete Reibarbeit kennzeichnende Signale, insbesondere dabei verzögerte Massen sowie deren Anfangs- und Endgeschwindigkeit beim Eingriff kennzeichnende Signale als Masse- bzw. Geschwindigkeitssignale, zugeführt. b) die Auswerteeinrichtung (5) ist derart ausgebildet, daß ihr Kennfeld diese Signale als Parameter enthält.

9. Einrichtung nach einem der vorhergehenden Ansprüche, gekennzeichnet durch folgendes Merkmal: Wenigstens ein erstes Bauteil und das zweite Bauteil bilden eine Bremseinrichtung (1a, 1b, 12a, 12b), insbesondere eine Radbremse eines Fahrzeugs, wobei das erste Bauteil als auf einem Belagträger als benachbartem Bauteil angeordneter Bremsbelag und das zweite Bauteil als zugeordnete Bremstrommel oder Bremsscheibe ausgebildet sind.

10. Einrichtung nach Anspruch 9, dadurch gekennzeichnet, daß die Einrichtung in einer Fahrzeugbremsanlage eines Kraftfahrzeugs oder einer aus dem Kraftfahrzeug und einem Anhänger gebildeten Fahrzeugkombination angeordnet ist, wobei die Bremseinrichtung als druckmittelbetätigte Radbremse ausgebildet ist.

11. Einrichtung nach Anspruch 10, gekennzeichnet durch folgende Merkmale: a) es sind an wenigstens zwei Radbremsen Temperatursensoren (2a, 2b, bzw. 11a, 11b) vorgesehen;

b) die Auswerteeinrichtung (5) ist als Vergleichsund Regeleinrichtung ausgebildet, welche die von den Temperatursensoren (2a, 2b bzw. 11a, 11b) der Radbremsen zugeführten Temperatursignale untereinander oder mit einem, gegebenenfalls aus dem Kennfeld gewonnenen, Sollwert vergleicht und über zugeordnete Druckregelventile den Bremsdruck der verschiedenen Radbremsen (1a, 1b, bzw. 12a, 12b), im Sinne einer Angleichung der Temperatursignale und damit des Verschleißes ihrer Bremsbeläge und/oder ihrer Bremsmomente aneinander oder an den Sollwert steuert.

12. Einrichtung nach Anspruch 11, wobei das Kennfeld als Parameter die den verschiedenen Radbremsen (1a, 1b, 12a, 12b) zugeordneten Teilmassen des Fahrzeugs und die Fahrzeuggeschwindigkeit enthält,

gekennzeichnet durch folgende Merkmale:

die Auswerteeinrichtung (5) ist derart ausgebildet, daß sie nach dem Kennfeld aus den bei einer oder nach einer oder mehreren früheren Bremsbetätigungen zugeführten Temperatursignalen und bei der oder den früheren Bremsbetätigungen zugeführten Masse- bzw. Geschwindigkeitssignalen Korrekturwerte, insbesondere einen Sollwert oder ein Sollwertkennfeld für die Differenz und/oder den Quotienten, der den verschiedenen Radbremsen zuzuführenden Bremsdrücke errechnet und speichert und bei einer Bremsbetätigung durch Steuerung der Druckregelventile die Bremsdrücke der verschiedenen Radbremsen nach den Korrekturwerten regelt.

13. Einrichtung nach Anspruch 12,
gekennzeichnet durch das Merkmal:

die Auswerteeinrichtung (5) ist derart ausgebildet, daß sie die Korrekturwerte, insbesondere die Sollwerte oder das Sollwertkennfeld, anhand der bei oder nach der Bremsbetätigung zugeführten Temperatursignalen sowie der bei der Bremsbetätigung gewonnenen Masse- bzw. Geschwindigkeitssignale aktualisiert.

**Revendications**

1. Dispositif pour mesurer et/ou réguler l'usure d'un premier composant qui s'use lors d'un contact glissant avec un second composant, comportant au moins un organe de mesure qui émet des signaux de sortie en fonction de l'usure, les signaux de sortie étant amenés à un dispositif de traitement,

caractérisé par la caractéristique suivante:

l'organe de mesure est conçu sous forme d'un détecteur de température (2a, 2b, 11a, 11b) qui est disposé dans le premier composant, ou près de lui et/ou dans un composant voisin de celui-ci, ou près de lui, et/ou dans le second composant, ou près de lui, et dont les signaux de sortie, fonction de la température, ci-dessous dénommés signaux de température, sont traités par le dispositif de traitement (5) pour donner des signaux de valeur de l'usure et sont édités comme tels.

2. Dispositif selon la revendication 1,
caractérisé en ce que sont prévus un dispositif de visualisation et/ou un dispositif d'alarme (7) qui sont commandés par les signaux d'usure.

3. Dispositif selon l'une des revendications 1 ou 2,

caractérisé en ce que sont prévus plusieurs groupes (1a, 1b, 12a, 12b) constitués d'un premier composant et d'un second composant correspondant, pour chacun desquels, ou pour quelques-uns desquels, le dispositif de traitement (5) et/ou le dispositif de visualisation et/ou le dispositif d'alarame (7) présentent un canal propre ou sur chacun desquels ou sur quelques-uns desquels on peut commuter le dispositif de traitement (5) et/ou le dispositif de visualisation et/ou le dispositif d'alarme (7).

4. Dispositif selon l'une des revendications précédentes,

caractérisé en ce que le détecteur de température (2a, 2b, 11a, 11b) qui se trouve dans le premier composant et/ou dans le composant voisin de celui-ci, par exemple un support qui reçoit ce composant, est disposé de façon à mesurer la température du premier composant.

5. Dispositif selon l'une des revendications 1 à 3,

caractérisé en ce que le détecteur de température (2a, 2b, 11a, 11b) est disposé dans le composant voisin du premier composant, par exemple son support, ou près de ce composant voisin, et saisit la température de ce composant voisin.

6. Dispositif selon l'une des revendications 4 ou 5,

caractérisé en ce qu'une pluralité de détecteurs de température sont disposés, répartis sur la longueur ou sur la périphérie et/ou sur la largeur du premier composant et/ou du composant voisin de celui-ci et en ce que le signal de température correspond à la moyenne arithmétique ou à la moyenne pondérée des signaux des différents détecteurs de température.

7. Dispositif selon l'une des revendications précédentes,

caractérisé par la caractéristique suivante:

dans le dispositif de traitement (5) est mémorisé un réseau de caractéristiques qui donne la correspondance entre la température du premier composant ou la température du second composant ou entre une température mixte des deux composants ou entre la température du composant voisin, avant et après le contact glissant, et l'usure du premier composant, et ä l'aide duquel le dispositif de traitement (5) détermine le signal de valeur de l'usure d'après les signaux de température amenés.

8. Dispositif selon la revendication 7,
caractérisé par les caractéristiques suivantes:

a) on amène au dispositif de traitement (5, en tant que signaux de masse et de vitesse, les signaux caractérisant le travail de frottement fourni lors du contact glissant, en particulier des signaux caractérisant les masses ainsi ralenties ainsi que leur vitesse initiale et leur vitesse finale lors du contact;

b) le dispositif de traitement (5) est conçu de façon telle que son réseau de caractéristiques contient ces signaux comme paramètres.

9. Dispositif selon l'une des revendications précédentes.

caractérisé par la caractéristique suivante:

au moins un premier composant et le second composant forment un dispositif de freinage (1a, 1b, 12a, 12b), en particulier un frein de roue d'un véhicule, dans lequel le premeir composant forme une garniture de frein disposée sur un support de garniture qui joue le rôle de composant voisin et dans lequel le second composant forme un tambour de frein ou un disque de frein correspondant.

10. Dispositif selon la revendication 9,

caractérisé en ce que le dispositif est disposé dans une installation de freinage d'un véhicule motorisé ou d'une combinaison formée d'un véhicule motorisé et d'une remorque, le dispositif de freinage étant conçu sous forme d'un frein de roue manoeuvré par un fluide sous pression.

11. Dispositif selon la revendication 10,

caractérisé par les caractéristiques suivantes:

a) les détecteurs de température (2a, 2b ou 11a, 11b) sont prévus sur au moins deux freins de roue;

b) le dispositif de traitement (5) est conçu sous forme du dispositif de comparaison et de régulation qui compare les signaux de température amenés par les détecteurs de température (2a, 2b ou 11a, 11b) des freins de roue entre eux ou avec une valeur prescrite éventuellement obtenue à partir du réseau de caractéristiques et qui, par l'intermédiaire de vannes correspondantes de régulation de la pression, commande la pression de freinage des différents freins de roue (1a, 1b ou 12a, 12b), dans le sens de rendre égaux les signaux de température, et donc l'usure de leurs garnitures de frein et/ou leurs moments de freinage entre eux ou à une valeur prescrite.

12. Dispositif selon la revendication 11, dans lequel le réseau de caractéristiques contient comme paramètres les masses partielles, correspondant aux différents freins de roue (1a, 1b, 12a, 12b) du véhicule ainsi que la vitesse du véhicule,

caractérisé par les caractéristiques suivantes:

le dispositif de traitement (5) est conçu de façon telle que, en fonction du réseau de caractéristiques, à partir des signaux de température amenés lors d'une, ou après une ou plusieurs manoeuvres de freinage antérieures et à partir des signaux de masse et de vitesse amenés lors de la ou des manoeuvres de freinage antérieures, il calcule et mémorise en particulier une valeur prescrite ou un réseau caractéristique de valeurs prescrites pour la différence et/ou le quotient des pressions de freinage à amener aux différents freins de roue et que, lors d'une manoeuvre de freinage, par commande des vannes de régulation de pression, il régule les pressions de freinage des différents freins de roue en fonction des valeurs correctrices.

13. Dispositif selon la revendication 12,

caractérisé par la caractéristique:

le dispositif de traitement (5) est conçu de façon qu'il actualise les valeurs correctrices, en particulier les valeurs prescrites ou le réseau caractéristique des valeurs prescrites, à l'aide des signaux de température amenés lors, ou après, la manoeuvre de freinage ainsi qu'à l'aide des signaux de masse ou de vitesse obtenus lors de la manoeuvre de freinage.

## Claims

1. An arrangement for measuring and/or regulating the wear of a first component, which is subjected to wear when in frictional engagement with a second component, with at least one measuring element emitting wear-dependent output signals, the output signals being supplied to an evaluation arrangement,

characterized by the following feature:

the measuring element is constructed as a temperature sensor (2a, 2b, 11a, 11b) arranged in or on the first component and/or in or on a component adjacent this first component and/or in or on a second component, the temperature-dependent output signals of which sensor, hereinafter called temperature signals, are evaluated by the evaluation arrangement (5) in the form of wear value signals and are emitted as such.

2. An arrangement according to claim 1, characterized in that an indicating and/or warning arrangement (7) that is controlled by the wear signals is provided.

3. An arrangement according to one of claims 1 or 2, characterized in that several groups of components (1a, 1b, 12a, 12b) constituted by a first component and associated second component are provided, for each of which or for several of which the evaluation arrangement (5) and/or the indicating and/or warning arrangement (7) has a separate channel, or to each of which or to several of which the evaluation arrangement (5) and/or the indicating and/or warning arrangement (7) can be switched.

4. An arrangement according to one of the preceding claims, characterized in that the temperature sensor (2a, 2b, 11a, 11b) in the first component and/or the component adjacent thereto, possibly a supporting member containing this, is arranged in such a way that it measures the temperature of the first component.

5. An arrangement according to one of claims 1 to 3, characterized in that the temperature sensor (2a, 2b, 11a, 11b) is arranged in or on the component adjacent the first component, possibly its supporting member, and records the temperature of this adjacent component.

6. An arrangement according to one of claims 4 or 5, characterized in that a plurality of temperature sensors is arranged distributed along the length or around the circumference and/or across the width of the first component and/or of the component adjacent thereto and the temperature signal corresponds to the arithmetic or weighted mean value of the signals of the individual temperature sensors.

7. An arrangement according to one of the preceding claims, characterized by the following feature:

the evaluation arrangement (5) has stored in it performance data relating the temperature of the first or the temperature of the second component or a combined temperature of both components or the temperature of the adjacent component, before and after frictional engagement, to wear of the first component, from which performance data the evaluation arrangement (5) determines the wear value signal in accordance with the supplied temperature signals.

8. An arrangement according to claim 7, characterized by the following features:

a) the evaluation arrangement (5) has supplied to it signals characterizing the frictional work occurring during frictional engagement, in particular the masses decelerated thereby, and signals characterizing the initial and final speed thereof during engagement as mass and speed signals;

b) the evaluation arrangement (5) is constructed so that its performance data contains these signals as parameters.

9. An arrangement according to one of the preceding claims, characterized by the following feature:

at least one first component and the second component form a braking arrangement (1a, 1b, 12a, 12b), in particular a wheel brake of a vehicle, the first component being constructed as a brake lining arranged on a lining carrier as an adjacent component and the second component being constructed as the associated brake drum or brake disc.

10. An arrangement according to claim 9, characterized in that the arrangement is arranged in a vehicle brake system of a motor vehicle or a vehicle combination comprising the motor vehicle and a trailer, the braking arrangement being constructed as a pressure medium-operated wheel brake.

11. An arrangement according to claim 10, characterized by the following features:

a) temperature sensors (2a, 2b, and 11a, 11b) are provided on at least two wheel brakes;

b) the evaluation arrangement (5) is constructed as a comparing and regulating arrangement which compares the temperature signals obtained from the temperature sensors (2a, 2b, and 11a, 11b) of the wheel brakes with one another or with a desired value, optionally a desired value obtained from the performance data, and via associated pressure control valves controls the brake pressure of the different wheel brakes (1a, 1b, and 12a, 12b) in the sense that the temperature signals and thus the wear of their brake linings and/or their braking torques are matched to one another or to the desired value.

12. An arrangement according to claim 11, the performance data containing as parameters the partial masses of the vehicle associated with the different wheel brakes (1a, 1b, 12a, 12b) and the vehicle speed, characterized by the following features:

the evaluation arrangement (5) is constructed so that, according to the performance data, from the temperature signals obtained during one or after one or more earlier brake actuations and from mass and speed signals obtained during the earlier brake actuation or the earlier brake actuations, it calculates and stores correction values, in particular a desired value or a family of characteristics representing a desired value for the difference and/or the quotient of the brake pressures to be supplied to the different wheel brakes and during a brake actuation controls the brake pressures of the different wheel brakes in accordance with the correction values by controlling pressure control valves.

13. An arrangement according to claim 12, characterized by the feature:

the evaluation arrangement (5) is constructed so that it updates the correction values, in particular the desired values or the family of characteristics representing the desired values, on the basis of the temperature signals obtained during or after the brake actuation and on the basis of the mass or speed signals obtained during the brake actuation.

EP 0 189 083 B1